# EUROPÄISCHE PATENTSCHRIFT

(11) **EP 1 446 643 B1**
(45) Veröffentlichungstag und Bekanntmachung des Hinweises auf die Patenterteilung: **15.06.2011**
(21) Anmeldenummer: 02785061.9
(22) Anmeldetag: 14.11.2002
(51) Int. Cl.: G01K 7/16

(54) **MESSFÜHLER UND MESSFÜHLERANORDNUNG**
SENSOR AND SENSOR ASSEMBLY
CAPTEUR ET ENSEMBLE DE DETECTION

(30) Priorität: 19.11.2001 DE 10156753
(43) Veröffentlichungstag der Anmeldung: 18.08.2004
(73) Patentinhaber: EPCOS AG, 81669 München (DE)
(72) Erfinder: FISCHER, Thomas, 10961 Berlin (DE); GRUNDMANN, Wolfgang, 16547 Birkenwerder (DE); HERRMANN, Klaus, 14059 Berlin (DE)
(74) Vertreter: Epping - Hermann - Fischer
(86) Internationale Anmeldenummer: PCT/DE2002/004222
(87) Internationale Veröffentlichungsnummer: WO 2003/046496

(56) Entgegenhaltungen:
- EP-A- 0 866 519
- DE-A- 4 432 274
- GB-A- 2 207 509
- US-A- 5 342 126

## Beschreibung

Die Erfindung betrifft einen Meßfühler mit einem Sensorelement zum Erfassen einer physikalischen Größe, der in einem Fühlerkörper angeordnet ist. Ferner betrifft die Erfindung eine Meßfühleranordnung.

Meßfühler der eingangs genannten Art werden beispielsweise in der Kfz-Industrie zum Messen von Temperaturen angewendet. Diese Meßfühler müssen im Laufe der Fertigung eines Automobils in die Kfz-Elektronik integriert werden.

Es sind Meßfühler der eingangs genannten Art bekannt, bei denen bereits eine fest montierte Anschlußleitung am Fühler angeordnet ist. Diese Anschlußleitungen werden durch Einflechten in den bereits im Kfz vorhandenen Kabelbaum integriert. Diese Meßfühler haben den Nachteil, daß das Einflechten der am Fühler bereits vorhandenen Anschlußleitungen ein sehr aufwendiger Fertigungsvorgang ist. Darüber hinaus haben diese bekannten Fühler den Nachteil, daß Änderungen in der Leitungslänge, also beispielsweise das Ändern der Positionierung des Fühlers im Kfz, bereits eine Fertigungsumstellung erfordert.

Es sind darüber hinaus Meßfühler der eingangs genannten Art bekannt, bei denen die Kontaktierung des Fühlers mit den Leitungen in einem Kfz mittels eines Steckers und eines Gegensteckers erfolgt. Der Stecker ist dabei bereits am Fühler montiert, während der Gegenstecker in der entsprechenden Leitung des Kabelbaums montiert werden muß. Diese Art der Kontaktierung hat den Nachteil, daß dafür zusätzliche Bauelemente, nämlich Stecker benötigt werden, wodurch höhere Kosten entstehen. Darüber hinaus hat die Kontaktierung des Meßfühlers mit der Kfz-Elektronik mittels Steckern den Nachteil, daß zusätzliche Kontaktstellen erzeugt werden, die mögliche Fehlerquellen darstellen.

Die DE 4432274 A1 beschreibt ein elektrisch betriebenes Anzeigeinstrument. Das Anzeigeinstrument ist lösbar mittels Steckkontakten mit Gegensteckkontakten eines Steckelements verbindbar. Das Steckelement weist auf der von den Gegensteckkontakten abgewandten Seite Messerkontakte auf, die einen elektrisch leitfähigen Kontakt mit Kabeln herstellen können.

Die EP 0866519 A2 betrifft einen elektrischen Anschluss, bei dem ein Halter einen Überspannungsableiter trägt, der ein Leitungspaar zeitweilig elektrisch kurzschließen kann. Der Halter weist beidseitig Klemmkontakte zur Verbindung mit zwei Leitungspaaren auf.

Ziel der vorliegenden Erfindung ist es, einen Meßfühler anzugeben, der auf einfache Art und Weise mit einer elektrischen Anschlußleitung verbunden werden kann.

Dieses Ziel wird durch einen Meßfühler nach Patentanspruch 1 erreicht.

Es wird ein Meßfühler angegeben, das ein Sensorelement zum Erfassen einer physikalischen Größe aufweist. Das Sensorelement weist dabei zwei elektrische Kontaktflächen auf. Darüber hinaus enthält der Meßfühler einen Fühlerkörper, an dessen einem Ende das Sensorelement und an dessen anderem Ende ein Kontaktträger angeordnet ist. Der Kontaktträger trägt wenigstens zwei Schneid-Klemm-Kontakte zum Herstellen einer Schneid-Klemm-Verbindung mit einer elektrischen Anschlußleitung. Jede Kontaktfläche ist mit einem Schneid-Klemm-Kontakt verbunden.

Durch die Kombination eines Meßfühlers mit der Möglichkeit der Schneid-Klemm-Technik zur Kontaktierung mit einer elektrischen Anschlußleitung kann erreicht werden, daß ein bereits vorhandenes Kabel auf einfache Art und Weise mit dem Meßfühler elektrisch kontaktiert werden kann. Insbesondere hat die Schneid-Klemm-Technik den Vorteil, daß das mit dem Meßfühler zu kontaktierende Kabel beziehungsweise die mit dem Meßfühler zu kontaktierende elektrische Anschlußleitung durch die Schneid-Klemm-Kontakte des Meßfühlers durchlaufen kann, so daß ohne weiteres auch eine serielle Kontaktierung des Kabels mit mehreren Meßfühlern oder auch anderen Komponenten hergestellt werden kann.

Es wird darüber hinaus eine Meßfühleranordnung angegeben, bei der jeder Schneid-Klemm-Kontakt des Meßfühlers mit einer elektrischen Anschlußleitung verbunden ist.

Darüber hinaus wird eine Meßfühleranordnung angegeben, die eine Vielzahl von Meßfühlern umfaßt, wobei jeder Meßfühler wie bereits oben beschrieben aufgebaut ist. Jeweils ein Schneid-Klemm-Kontakt eines jeden Meßfühlers ist dabei mit ein und derselben elektrischen Anschlußleitung verbunden. Die einzelnen Schneid-Klemm-Kontakte der Meßfühler hängen sozusagen hintereinander geschaltet an ein und derselben elektrischen Anschlußleitung. Dadurch kann beispielsweise eine gemeinsame Zu- beziehungsweise Rückleitung beziehungsweise eine gemeinsame Kathode oder Anode für das Sensorelement in der Meßfühleranordnung realisiert werden. Die weiteren Schneid-Klemm-Kontakte der Meßfühler sind mit jeweils einer weiteren elektrischen Anschlußleitung verbunden. Die Rückleitung der Meßfühler wird somit separat ausgeführt.

Durch die Schneid-Klemm-Technik wird gewissermaßen ein Abzweig in die mit dem Meßfühler zu verbindende Anschlußleitung integriert. Die Anschlußleitung kann weiterlaufen und mit weiteren Komponenten an anderen Orten verbunden werden.

Die Meßfühleranordnung mit den mehreren Meßfühlern hat den Vorteil, daß durch das Hintereinanderschalten von Meßfühlern an eine einzige elektrische Anschlußleitung Leitungsmaterial und auch Verschaltungsaufwand eingespart werden kann.

Die Schneid-Klemm-Kontakte können beispielsweise ausgeführt sein, indem sie Vertiefungen aufweisen, in der zwei einander gegenüberliegende Klingen angeordnet sind. Die Klingen weisen eine scharfe Kante auf, die dazu geeignet ist, das Isoliermaterial einer elektrisch isolierten Anschlußleitung zu durchtrennen und das unter der Isolierung liegende elektrisch leitende Material, beispielsweise einen Kupferdraht, zu kontaktieren.

Dementsprechend wird auch eine Meßfühleranordnung angegeben, bei der in einem Schneid-Klemm-Kontakt eines Meßfühlers eine mit einer Isolierung versehene Anschlußleitung so eingeschoben ist, daß die Isolierung durch die Klingen des Schneid-Klemm-Kontakts durchtrennt ist und die Klingen den elektrischen Leiter, beispielsweise einen Kupferdraht, kontaktieren.

Der Meßfühler kann ferner einen Kontaktdeckel aufweisen, der Mittel zum Drücken einer elektrischen Anschlußleitung in den Raum zwischen zwei Klingen einer Vertiefung eines SchneidKlemm-Kontaktes und ferner Mittel zum Fixieren der Anschlußleitung in der Vertiefung des Schneid-Klemm-Kontaktes aufweist.

Durch einen solchen Kontaktdeckel können zwei verschiedene Funktionen miteinander kombiniert werden. Zum einen kann die elektrische Anschlußleitung durch Aufbringen des Deckels auf dem Schneid-Klemm-Kontakt in die Vertiefung eingedrückt wert den. Dadurch wird der elektrische Kontakt zwischen der elektrischen Anschlußleitung und dem Schneid-Klemm-Kontakt hergestellt. Desweiteren ermöglicht es der Kontaktdeckel, die Anschlußleitung auch mechanisch auf dem Schneid-Klemm-Kontakt beziehungsweise am Kontaktträger zu fixieren.

Das Mittel zum Drücken einer elektrischen Anschlußleitung in den Raum zwischen zwei Klingen kann dabei in vorteilhafter Ausführungsform der Erfindung als Drucksteg, der von dem Kontaktdeckel aus nach unten ragt, ausgeführt sein. Als Mittel zum Fixieren der Anschlußleitung in der Vertiefung kommt es beispielsweise in Betracht, am Kontaktdeckel eine Öse vorzusehen, die in einen Schnapphaken am Kontaktträger einrastet. Das Einrasten geschieht dabei beim Aufschieben des Kontaktdeckels auf den Kontaktträger.

Die Schneid-Klemm-Kontakte können mit Kontaktelementen versehen sein, die mit am Sensorelement angeordneten Kontaktleitungen fest verbunden sind.

Daneben kommt es auch in Betracht, daß die Schneid-Klemm-Kontakte mittels elektrisch leitender Verbindungen mit dem Sensorelement verbunden sind, wobei die Schneid-Klemm-Kontakte und die elektrisch leitenden Verbindungen integraler Bestandteil eines gestanzten Bleches sind. Als solches Blech kommt beispielsweise ein Leadframe in Betracht.

Zum Schutz der Schneid-Klemm-Verbindung vor Feuchtigkeit ist es vorteilhaft, wenn eine auf den Kontaktträger aufschiebbare Dichthaube vorgesehen ist.

Der Schutz vor Feuchtigkeit kann auch erreicht werden, indem sowohl der Kontaktdeckel als auch der Kontaktträger mit Dichtungselementen versehen sind, die durch Montage des Kontaktdeckels auf dem Kontaktträger elastisch verformt werden können und die somit die Schneid-Klemm-Verbindung gegen Feuchtigkeit abdichten.

Es ist darüber hinaus besonders vorteilhaft, wenn in dem Meßfühler ein Bus-System vorgesehen ist. Ein solches Bus-System hat den Vorteil, daß es über Mehrfachleitungen an ein entsprechendes Bus-Kontrollgerät beziehungsweise ein Bus-Steuergerät verbunden werden kann. Mehrere mit einem Bus-System versehene Meßfühler können mittels der einzigen Mehrfachleitung an das Steuergerät angeschlossen werden. Dadurch kann der Verkabelungsaufwand beträchtlich vereinfacht werden.

Dementsprechend wird eine Meßfühleranordnung angegeben, die eine Vielzahl von Meßfühlern aufweist, wobei jeder Meßfühler mit einem integrierten Bus-System versehen ist. Darüber hinaus ist eine Vielzahl von Busleitungen vorgesehen, wobei jede Busleitung mit einem Schneid-Klemm-Kontakt eines jeden Meßfühlers verbunden ist. Es resultiert daraus eine Hintereinanderschaltung einer Vielzahl von Meßfühlern, die alle über ein und dieselbe Vielzahl von Busleitungen angesteuert beziehungsweise ausgelesen werden können.

Es ist insbesondere nicht mehr notwendig, zu jedem Meßfühler ein extra Paar von Anschlußleitungen zu verlegen.

Zur weiteren Sicherung der an den Meßfühler anzuschließenden elektrischen Anschlußleitung kann es vorgesehen sein, daß der Meßfühler mit einer Kontaktsicherheit versehen ist. Eine solche Kontaktsicherheit kann beispielsweise am Kontaktträger angeordnet sein. Es eignen sich dafür beispielsweise Crimps, die mit einer besonderen Vorrichtung (zum Beispiel Crimpzange) geschlossen werden können. Es kommt aber auch in Betracht, zwei einfache gerade Bleche vorzusehen, die auf dem Kontaktträger nach oben gerichtet sind. Nach dem Einlegen der elektrischen Anschlußleitung in den Schneid-Klemm-Kontakt werden die Bleche umgebogen und somit die elektrische Anschlußleitung fixiert. Dadurch wird eine vorteilhafte Zugentlastung der Anschlußleitung erreicht.

Im folgenden wird die Erfindung anhand von Ausführungsbeispielen und den dazugehörigen Figuren näher erläutert.
- Figur 1A: zeigt beispielhaft einen erfindungsgemäßen Meßfüh-ler in einer ersten Seitenansicht.
- Figur 1B: zeigt den Meßfühler aus Figur 1A in einer zweiten Seitenansicht.
- Figur 2A: zeigt den Meßfühler aus Figur 1A mit geschlossenem Kontaktdeckels.
- Figur 2B: zeigt den Meßfühler aus Figur 1B mit geschlossenem Kontaktdeckel.
- Figur 3: zeigt beispielhaft einen weiteren erfindungsgemäßen
- -: Meßfühler in einem schematischen Querschnitt.
- Figur 4: zeigt beispielhaft einen weiteren Meßfühler in ei- nem schematischen Querschnitt, der in ein Gehäuse eingebaut ist.
- Figur 5: zeigt beispielhaft einen weiteren Meßfühler mit ei- ner äußeren Abdichtung gegen Feuchtigkeit.
- Figur 6A: zeigt beispielhaft einen weiteren erfindungsgemäßen Meßfühler mit einer inneren Abdichtung gegen Feuch- tigkeit in einer ersten Seitenansicht mit geschlos- senem Kontaktdeckel.
- Figur 6B: zeigt den Meßfühler aus Figur 6A bei geöffnetem Kontaktdeckel in einer Draufsicht.
- Figur 6C: zeigt den Deckel des Meßfühlers aus Figur 6A in ei- ner Draufsicht.
- Figur 7: zeigt beispielhaft eine erste erfindungsgemäße Meß- fühleranordnung.
- Figur 8: zeigt beispielhaft eine weitere erfindungsgemäße Meßfühleranordnung.
- Figur 9: zeigt eine weitere erfindungsgemäße beispielhafte Meßfühleranordnung mit einem Bus-System.

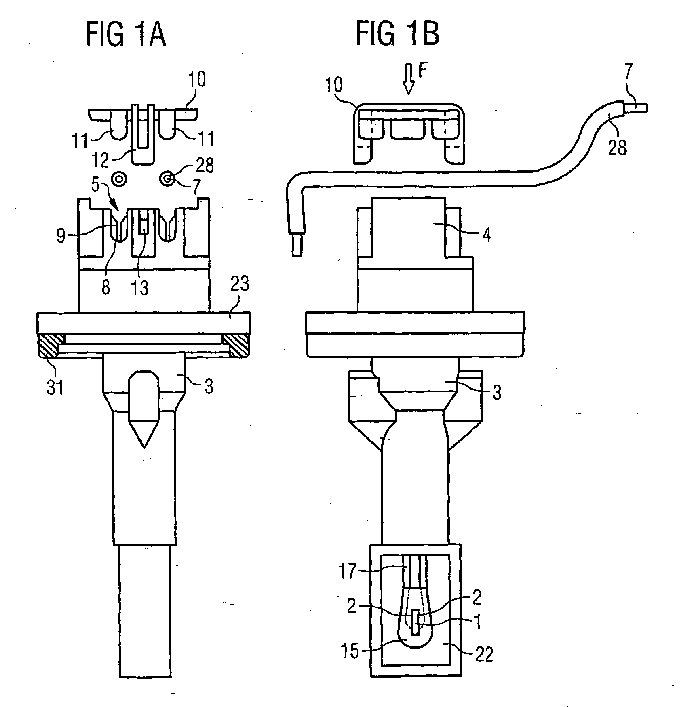

Figur 1A und 1B zeigen einen Meßfühler mit einem Fühlerkörper 3, an dessen unteren Ende ein Sensorelement 1 in einem Loch 22 angeordnet ist. Das Sensorelement 1 dient zur Erfassung einer physikalischen Größe und kann beispielsweise zur Messung von Temperatur ausgeführt sein. Das Sensorelement 1 verfügt über Kontaktflächen 2, an denen das Sensorelement 1 mittels elektrisch leitender Verbindungen 17 elektrisch kontaktiert werden kann. Das Sensorelement ist von einer Vergußmasse 15 umhüllt. Der Fühlerkörper 3 ist auf an seinem anderen Ende mit einem Kontaktträger 4 versehen, der zwei Schneid-Klemm-Kontakte 5 trägt. Die Schneid-Klemm-Kontakte 5 enthalten dabei eine Vertiefung 8, in der jeweils zwei gegenüberliegende Klingen 9 angeordnet sind.

Durch Einschieben einer elektrischen Anschlußleitung 7, die mit einer Isolierung 28 versehen ist, in die Vertiefung 8 kann erreicht werden, daß die Klingen 9 die Isolierung 28 durchtrennen und die elektrische Anschlußleitung 7 kontaktieren. Es ist ein Kontaktdeckel 10 vorgesehen, mit dem die elektrische Anschlußleitung 7 durch Aufwenden der Kraf F in die Vertiefungen 8 der Schneid-Klemm-Kontakte 5 gedrückt werden kann. Das Eindrücken der elektrischen Anschlußleitung 7 geschieht dabei mittels Druckstegen 11, die an dem Kontaktdeckel 10 angeordnet sind.

Der Kontaktdeckel 10 weist ferner eine Öse 12 auf, die in einen Schnapphaken 13 des Kontaktträgers 4 einrasten kann. Dadurch wird erreicht, daß mit Aufschieben des Kontaktdeckels 10 gleichzeitig eine elektrische und mechanische Verbindung zwischen der elektrischen Anschlußleitung 7 und dem Meßfühler hergestellt wird.

Der Meßfühler weist ferner einen Flansch 23 auf, der mit einer Dichtung 31 versehen ist. Dadurch kann der Meßfühler auch in ein Gehäuse beziehungsweise in eine Wand eines Gehäuses eingebaut werden.

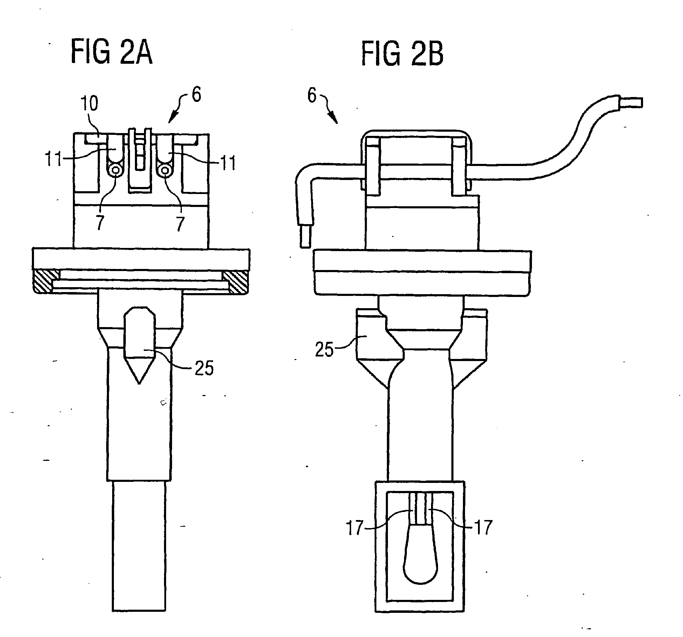

Die Figuren 2A und 2B zeigen den Meßfühler aus den Figuren 1A und 1B mit geschlossenem Kontaktdeckel 10. Durch Schließen des Kontaktdeckel 10 kann eine Schneid-Klemm-Verbindung 6 hergestellt werden, wodurch die elektrischen Anschlußleitungen 7 mit dem Meßfühler verbunden werden.

Jede Kontaktfläche 2 ist mit einem Schneid-Klemm-Kontakt 5 mittels einer elektrisch leitenden Verbindung 17 verbunden.

Der Fühlerkörper 3 des Meßfühlers verfügt darüber hinaus über einen Bajonett-Verschluß 25, der ein einfaches und sicheres Verbinden des Meßfühlers mit der Wand eines Gehäuses ermöglicht.

Den Figuren 2A und 2B ist auch zu entnehmen, wie die Druckstege 11 des Kontaktdeckels 10 die elektrische Anschlußleitung 7 in die Vertiefung 8 des Schneid-Klemm-Kontaktes 5 drücken.

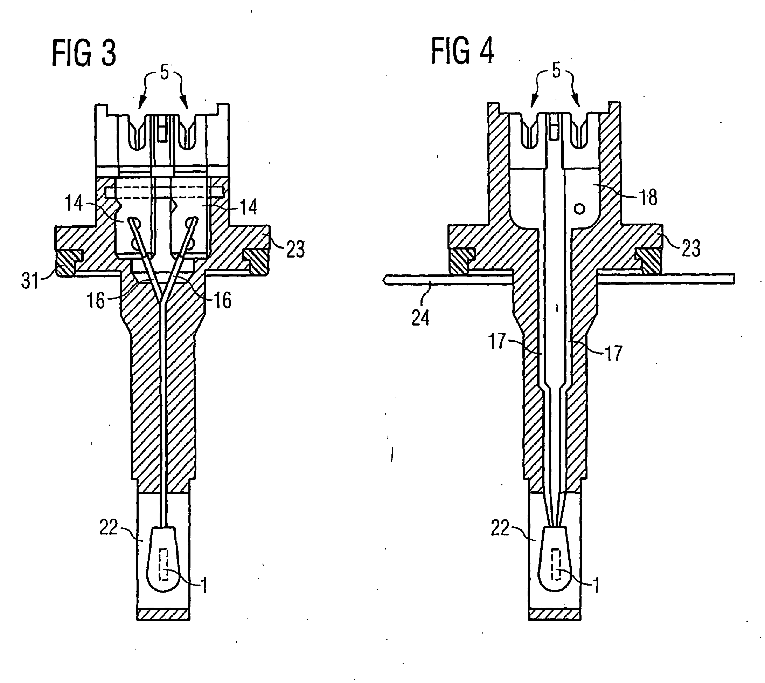

Figur 3 zeigt einen Meßfühler, bei dem die Schneid-Klemm-Kontakte 5 mit Kontaktelementen 14 versehen sind. Das Sensorelement 1 ist mit Kontaktleitungen 16 versehen, die den elektrischen Kontakt zwischen dem Sensorelement 1 und den Kontaktelementen 14 und mithin mit den Schneid-Klemm-Kontakten 5 herstellen. Die Kontaktierung zwischen den Kontaktleitungen 16 und den Kontaktelementen 14 kann beispielsweise mittels Löten oder Schweißen hergestellt sein.

Figur 4 zeigt einen Meßfühler, der mittels des Flansches 23 in ein Gehäuse 24 eingebaut ist. Die Schneid-Klemm-Kontakte 5 sowie die elektrisch leitenden Verbindungen 17 zwischen den Schneid-Klemm-Kontakten 5 und dem Sensorelement 1 sind integraler Bestandteil eines gestanzten Blechs 18. Ein solches Blech 18 kann beispielsweise ein Leadframe sein. Das Blech 18 wird durch Stanzen hergestellt und anschließend wird das Sensorelement 1 durch Löten mit dem Blech 18 elektrisch leitend verbunden. Das Sensorelement 1 kann beispielsweise ein NTC-Temperatürfühler sein.

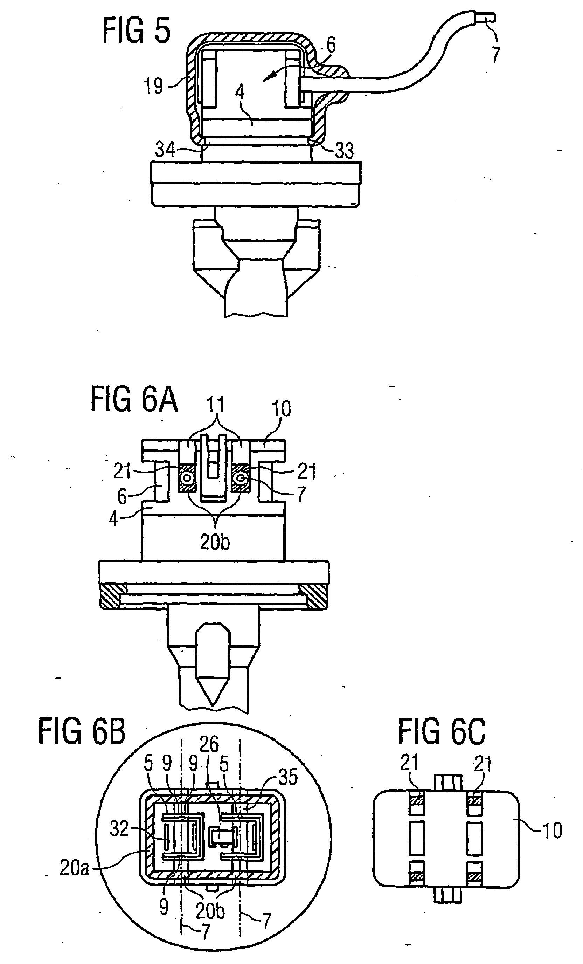

Figur 5 zeigt einen Meßfühler, der mit einer Dichthaube 19 versehen ist. Die Dichthaube 19 verhindert das Eindringen von Feuchte von außen in die Schneid-Klemm-Verbindung 6. Die Dichthaube 19 ist aus wasserundurchlässigem Material gefertigt. Sie kann beispielsweise aus Gummi bestehen. Die Dichthaube 19 wird von oben auf den Kontaktträger 4 aufgeschoben, wobei Wulste 33 in eine Vertiefung 34 im Kontaktträger 4 eingreifen und somit die Schneid-Klemm-Verbindung 6 abdichten. Die Dichthaube 19 verfügt ferner über eine Öffnung, durch die die elektrische Anschlußleitung 7 zur Schneid-Klemm-Verbindung gelangen kann.

Ein solcher gegen Feuchte abgedichteter Meßfühler hat den Vorteil, daß er beispielsweise in einem Verdampfer einer Klimaanlage angewendet werden kann.

Der Meßfühler kann auch mit einer Innendichtung versehen sein. Eine solche Innendichtung ist dargestellt in den Figuren 6A bis 6C. Figur 6A zeigt einen Meßfühler mit geschlossenem Kontaktdeckel 10 entsprechend Figur 2A. An der Unterseite der Druckstege 11 sind Dichtungselemente 21 des Kontaktdekkels 10 angeordnet. Desweiteren sind unterhalb der elektrischen Anschlußleitungen 7 Dichtungselemente 20b des Kontaktträgers 4 angeordnet. Durch Aufdrücken des Kontaktdeckels 10 auf den Kontaktträger 4 werden die Dichtungen 21, 20b elastisch verformt und somit die Schneid-Klemm-Verbindung 6 gegen Feuchteinflüsse von außen abgedichtet.

Figur 6B zeigt den Kontaktträger 4 aus Figur 6A in einer Draufsicht. Man erkennt, daß entlang des äußeren Randes des Kontaktträgers 4 eine Dichtung 20a in den Kontaktträger 4 eingearbeitet ist. In dem Kontaktträger 4 befinden sich Vertiefungen 35, in denen die elektrischen Anschlußleitungen 7 verlaufen. An der Stelle der Vertiefungen 35 weist der Kontaktträger 4 vertieft angeordnete Dichtungselemente 20b auf, die auch in Figur 6A zu sehen sind. Die Dichtungselemente 20a werden durch Aufdrücken des Kontaktdeckels 10 auf den Kontaktträger 4 verpreßt, wodurch die Abdichtung hergestellt wird.

Gemäß Figur 6B sind die Schneid-Klemm-Kontakte 5 mit jeweils zwei miteinander fluchtenden Paaren von Klingen 9 ausgeführt, wodurch sich eine Schneid-Klemm-Verbindung 6 mit erhöhter Kontaktsicherheit realisieren läßt, da jede elektrische Anschlußleitung 7 mit zwei Paaren von Klingen 9 verbunden wird.

In Figur 6B ist auch eine Kontaktsicherheit 32 gezeigt, die in Form von nach oben aus dem Kontaktträger 4 herausstehenden Blechen gezeigt ist. Nach Einlegen der elektrischen Anschlußleitung 7 in die Vertiefung 35 des Kontaktträgers 4 werden die Bleche nach innen gebogen und mithin die elektrische Anschlußleitung 7 zum Zwecke der Zugentlastung mechanisch fixiert.

Figur 6B zeigt darüber hinaus ein Bus-System 26, das in den Kontaktträger 4 integriert ist und das mit den Schneid-Klemm-Kontakten 5 elektrisch leitend verbunden ist.

Figur 6C zeigt den Kontaktdeckel 10 aus Figur 6A in einer Draufsicht. Es sind die unterhalb der Druckstege 11 angeordneten Dichtungselemente 21 zu erkennen.

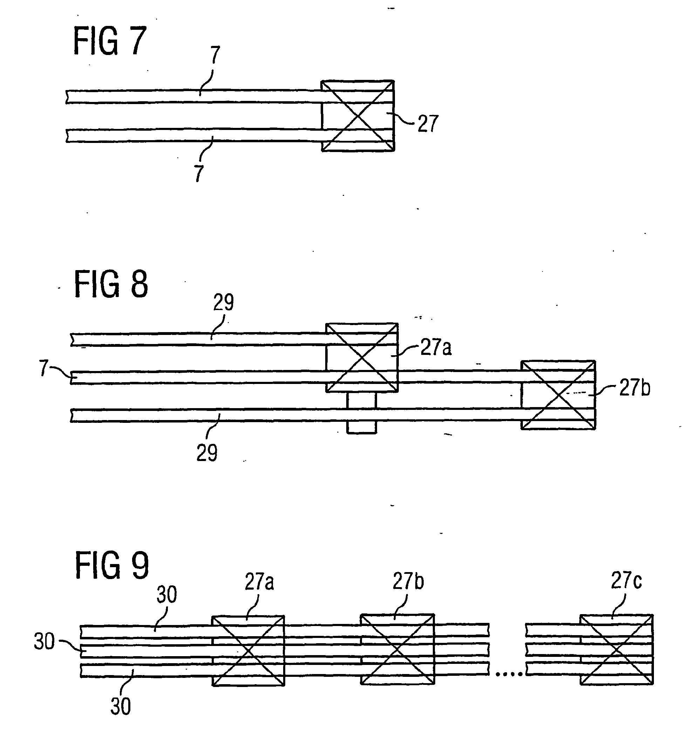

Figur 7 zeigt eine Meßfühleranordnung, bei der ein Meßfühler 27 mit zwei elektrischen Anschlußleitungen 7 verbunden ist. Dabei sind die Schneid-Klemm-Kontakte des Meßfühlers 27 mit den elektrischen Anschlußleitungen 7 verbunden.

Figur 8 zeigt eine weitere Meßfühleranordnung, bei der zwei Meßfühler 27a, 27b mit einer elektrischen Anschlußleitung 7 sowie mit weiteren elektrischen Leitern 29 verbunden sind. Die elektrische Anschlußleitung 7 läuft dabei durch den Meßfühler 27a durch und ist sowohl mit dem Meßfühler 27a als auch mit dem Meßfühler 27B verbunden. Dadurch kann eine gemeinsame Rückleitung für die beiden Meßfühler 27a, 27b realisiert werden. Die Zuleitung wird realisiert durch weitere elektrische Anschlußleitung 29, wobei jeder Meßfühler 27a, 27b mit einem weiteren elektrischen Leiter 29 verbunden ist.

Darüber hinaus kann eine Leitungsführung 36 vorgesehen sein, die das parallele Führen der Leitungen 7, 29 vereinfacht.

Figur 9 zeigt eine Meßfühleranordnung mit Meßfühlern 27a, 27b, 27c, wobei jeder Meßfühler mit einem Bus-System-versehen ist. Jeder Meßfühler ist mit Busleitungen 30 verbunden. Die Busleitungen 30 laufen dabei vom Meßfühler 27a zum Meßfühler 27b und von dort weiter zum Meßfühler 27c. Eine eigene Busleitung 30 für jeden Meßfühler 27a, 27b, 27c ist nicht erforderlich. Vielmehr kann jede Busleitung 30 mit mehreren Schneid-Klemm-Kontakten verschiedener Meßfühler 27a, 27b, 27c auf einfache Art und Weise verbunden werden.

## Patentansprüche

1. Messfühler
mit einem Sensorelement (1) zum Erfassen einer physikalischen Größe, das zwei elektrische Kontaktflächen (2) aufweist,
mit einem Fühlerkörper (3), an dessen einem Ende das Sensorelement (1) und an dessen anderem Ende ein Kontaktträger (4) angeordnet ist, bei dem der Kontaktträger (4) wenigstens zwei Schneid-Klemm-Kontakte (5) trägt, die zum Herstellen einer Schneid-Klemm-Verbindung (6) mit einer elektrischen Anschlussleitung (7) eingerichtet sind, und bei dem jede Kontaktfläche (2) mit einem Schneid-Klemm-Kontakt (5) verbunden ist.

2. Messfühler nach Anspruch 1,
bei dem jeder Schneid-Klemm-Kontakt (5) eine Vertiefung (8) aufweist, in der zwei einander gegenüberstehende Klingen (9) angeordnet sind.

3. Messfühler nach einem der Ansprüche 1 oder 2,
bei dem ein Kontaktdeckel (10) vorgesehen ist, der Mittel (11) zum Drücken einer elektrischen Anschlussleitung (7) in den Raum zwischen zwei Klingen (9) eines Schneid-Klemm-Kontakts (5) und
Mittel (12) zum Fixieren der elektrischen Anschlussleitung (7) in der Vertiefung (8) eines Schneid-Klemm-Kontakts (5) aufweist.

4. Messfühler nach Anspruch 3,
bei dem das Mittel zum Drücken einer elektrischen Anschlussleitung (7) in dem Raum zwischen zwei Klingen (9) eines Schneid-Klemm-Kontakts (5) ein Drucksteg (11) ist, und
bei dem das Mittel zum Fixieren der elektrischen Anschlussleitung (7) in der Vertiefung (8) eines Schneid-Klemm-Kontakts (5) eine Öse (12) ist, die in einem Schnapphaken (13) des Kontaktträgers (4) einrastet.

5. Messfühler nach einem der Ansprüche 1 bis 4,
bei dem an den Schneid-Klemm-Kontakten (5) Kontaktelementes (14) angeordnet sind, die mit am Sensorelement (1) angeordneten Kontaktleitungen (16) verbunden sind.

6. Messfühler nach einem der Ansprüche 1 bis 4,
bei dem die Schneid-Klemm-Kontakte (5) mittels elektrisch leitender Verbindungen (17) mit dem Sensorelement (1) verbunden sind und
bei dem die Schneid-Klemm-Kontakte (5) und die elektrisch leitenden Verbindungen (17) integrale Bestandteile eines gestanzten Bleches (18) sind.

7. Messfühler nach einem der Ansprüche 1 bis 6,
bei dem eine auf den Kontaktträger (4) aufschiebbare Dichthaube (19) zum Schutz der Schneid-Klemm-Verbindung (6) vor Feuchtigkeit vorgesehen ist.

8. Messfühler nach einem der Ansprüche 3 bis 6,
bei dem im Kontaktdeckel (10) sowie im Kontaktträger (4) Dichtungselemente (20a, 20b, 21) angeordnet sind, die durch Montage des Kontaktdeckels (10) auf dem Kontaktträger (4) elastisch verformt werden können und die Schneid-Klemm-Verbindung (6) gegen Feuchtigkeit abdichten.

9. Messfühler nach einem der Ansprüche 1 bis 8,
bei dem das Sensorelement (1) in einem Loch (22) des Fühlerkörpers (3) angeordnet ist.

10. Messfühler nach einem der Ansprüche 1 bis 9,
bei dem der Fühlerkörper (3) im Bereich des Kontaktträgers (4) einen Flansch (23) zur Montage des Messfühlers in der Wand eines Gehäuses (24) aufweist.

11. Messfühler nach einem der Ansprüche 1 bis 10,
bei dem der Fühlerkörper (3) mit einem Bajonett-Verschluß (25) versehen ist.

12. Messfühler nach einem der Ansprüche 1 bis 11,
in dem ein Bus-System (26) vorgesehen ist.

13. Messfühleranordnung
mit einem Messfühler (27) nach einem der Ansprüche 1 bis 12 und mit elektrischen Leitungen (7), bei der jeder Schneid-Klemm-Kontakt (5) mit einer elektrischen Anschlussleitung (7) verbunden ist.

14. Messfühleranordnung nach Anspruch 13,
bei der jeder Schneid-Klemm-Kontakt (5) eine Vertiefung (8) aufweist, in der zwei einander gegenüberstehende Klingen (9) angeordnet sind und bei der in einem Schneid-Klemm-Kontakt (5) eine mit einer elektrischen Isolierung (28) versehene elektrische Pinschlussleitung (7) so eingeschoben ist, daß die Isolierung (28) durch die Klingen (9) durchtrennt ist und die Klingen (9) die elektrische Anschlussleitung (7) kontaktieren.

15. Messfühleranordnung nach Anspruch 13 oder 14 mit weiteren Messfühlern nach einem der Ansprüche 1 bis 12, die eine Vielzahl von Messfühlern (27a, 27b, 27c) bilden,
bei der jeweils ein Schneid-Klemm-Kontakt (5) eines jeden Messfühlers (27a, 27b, 27c) mit ein und derselben elektrischen Anschlussleitung (7) verbunden ist und bei der alle anderen Schneid-Klemm-Kontakte (5) mit jeweils einem weiteren Leiter (29) verbunden sind.

16. Messfühleranordnung nach Anspruch 13 oder 14 mit weiteren Messfühlern nach einem der Ansprüche 1 bis 12, die eine Vielzahl von Messfühlern (27a, 27b, 27c) bilden,
bei der in jedem Messfühler (27a, 27b, 27c) ein Bus-System (26) vorgesehen ist,
bei der eine Vielzahl von Busleitungen (30) vorgesehen ist und bei der jede Busleitung (30) mit jeweils einem Schneid-Klemm-Kontakt (5) eines jeden Messfühlers (27a, 27b, 27c) verbunden ist.

## Claims

1. Measurement sensor having a sensor element (1) for detecting a physical variable, which sensor element has two electrical contact areas (2), having a sensor body (3), the sensor element (1) being arranged at one end of the said sensor body and a contact support (4) being arranged at the other end of the said sensor body, in which the contact support (4) is fitted with at least two insulation displacement terminal contacts (5) which are designed to establish an insulation displacement terminal connection (6) to an electrical connection line (7), and in which each contact area (2) is connected to an insulation displacement terminal contact (5).

2. Measurement sensor according to Claim 1, in which each insulation displacement terminal contact (5) has a recess (8) in which two blades (9) which are situated opposite one another are arranged.

3. Measurement sensor according to either of Claims 1 and 2, in which a contact cover (10) is provided, the said contact cover having means (11) for pressing an electrical connection line (7) into the space between two blades (9) of an insulation displacement terminal contact (5), and means (12) for fixing the electrical connection line (7) in the recess (8) in an insulation displacement terminal contact (5).

4. Measurement sensor according to Claim 3, in which the means for pressing an electrical connection line (7) into the space between two blades (9) of an insulation displacement terminal contact (5) is a pressure web (11), and in which the means for fixing the electrical connection line (7) in the recess (8) in an insulation displacement terminal contact (5) is an eyelet (12) which latches into a snap-action hook (13) of the contact support (4).

5. Measurement sensor according to one of Claims 1 to 4, in which contact elements (14) are arranged on the insulation displacement terminal contacts (5), the said contact elements being connected to contact lines (16) which are arranged on the sensor element (1).

6. Measurement sensor according to one of Claims 1 to 4, in which the insulation displacement terminal contacts (5) are connected to the sensor element (1) by means of electrically conductive connections (17), and in which the insulation displacement terminal contacts (5) and the electrically conductive connections (17) are integral constituent parts of a stamped metal sheet (18).

7. Measurement sensor according to one of Claims 1 to 6, in which a sealing hood (19), which can be pushed onto the contact support (4), is provided for the purpose of protecting the insulation displacement terminal connection (6) against moisture.

8. Measurement sensor according to one of Claims 3 to 6, in which sealing elements (20a, 20b, 21) are arranged in the contact cover (10) and in the contact support (4), it being possible for the said sealing elements to be elastically deformed by the contact cover (10) being mounted on the contact support (4), and the said sealing elements sealing off the insulation displacement terminal connection (6) from moisture.

9. Measurement sensor according to one of Claims 1 to 8, in which the sensor element (1) is arranged in a hole (22) in the sensor body (3).

10. Measurement sensor according to one of Claims 1 to 9, in which the sensor body (3) has, in the region of the contact support (4), a flange (23) for mounting the measurement sensor in the wall of a housing (24).

11. Measurement sensor according to one of Claims 1 to 10, in which the sensor body (3) is provided with a bayonet fitting (25).

12. Measurement sensor according to one of Claims 1 to 11, in which a bus system (26) is provided.

13. Measurement sensor arrangement having a measurement sensor (27) according to one of Claims 1 to 12 and having electrical lines (7), in which each insulation displacement terminal contact (5) is connected to an electrical connection line (7).

14. Measurement sensor arrangement according to Claim 13, in which each insulation displacement terminal contact (5) has a recess (8) in which two blades (9), which are situated opposite one another, are arranged, and in which an electrical connection line (7), which is provided with an electrical insulation means (28), is inserted into an insulation displacement terminal contact (5) such that the insulation means (28) is severed by the blades (9) and the blades (9) make contact with the electrical connection line (7).

15. Measurement sensor arrangement according to Claim 13 or 14 having further measurement sensors according to one of Claims 1 to 12 which form a large number of measurement sensors (27a, 27b, 27c), in which in each case one insulation displacement terminal contact (5) of each measurement sensor (27a, 27b, 27c) is connected to one and the same electrical connection line (7), and in which all the other insulation displacement terminal contacts (5) are connected to in each case one further conductor (29).

16. Measurement sensor arrangement according to Claim 13 or 14 having further measurement sensors according to one of Claims 1 to 12 which form a large number of measurement sensors (27a, 27b, 27c), in which a bus system (26) is provided in each measurement sensor (27a, 27b, 27c), in which a large number of bus lines (30) is provided, and in which each bus line (30) is connected to in each case one insulation displacement terminal contact (5) of each measurement sensor (27a, 27b, 27c).

## Revendications

1. Capteur comprenant un élément de capteur (1), comportant deux surfaces de contact électrique (2), destiné à détecter une grandeur physique, comprenant un corps de capteur (3) sur une extrémité duquel est disposé l'élément de capteur (1) et sur l'autre extrémité duquel est disposé un support de contact (4), le support de contact (4) supportant au moins deux contacts à déplacement d'isolant (5) qui sont conçus pour produire un raccordement par déplacement d'isolant (6) à un câble de raccordement électrique (7), et dans lequel chaque surface de contact (2) est reliée à un contact à déplacement d'isolant (5).

2. Capteur selon la revendication 1, dans lequel chaque contact à déplacement d'isolant (5) présente un évidement (8) dans lequel sont disposées deux lames (9) situées en face l'une de l'autre.

3. Capteur selon l'une des revendications 1 ou 2, dans lequel il est prévu un couvercle de contact (10) qui comprend
un moyen (11) destiné à repousser un câble de raccordement électrique (7) dans l'espace situé entre deux lames (9) d'un contact à déplacement d'isolant (5), et
un moyen (12) destiné à fixer le câble de raccordement électrique (7) dans l'évidement (8) d'un contact à déplacement d'isolant (5).

4. Capteur selon la revendication 3,
dans lequel le moyen destiné à repousser un câble de raccordement électrique (7) dans l'espace situé entre deux lames (9) d'un contact à déplacement d'isolant (5) est une barre de pression (11), et
dans lequel le moyen destiné à fixer le câble de raccordement électrique (7) dans l'évidement (8) du contact à déplacement d'isolant (5) est un oeillet (12) qui s'encliquette dans un crochet (13) du support de contact (4).

5. Capteur selon l'une des revendications 1 à 4, dans lequel des éléments de contact (14) qui sont reliés à des conducteurs de contact (16) disposés sur l'élément de capteur (1), sont disposés sur les contacts à déplacement d'isolant (5).

6. Capteur selon l'une des revendications 1 à 4, dans lequel les contacts à déplacement d'isolant (5) sont reliés à l'élément de capteur (1) au moyen de liaisons électriquement conductrices (17), et
dans lequel les contacts à déplacement d'isolant (5) et les liaisons électriquement conductrices (17) font partie intégrante d'une plaque estampée (18).

7. Capteur selon l'une des revendications 1 à 6, dans lequel un capot d'étanchéité (19) pouvant être amené à coulisser sur le support de contact (4) est prévu pour la protection de la connexion par déplacement d'isolant (6) contre l'humidité.

8. Capteur selon l'une des revendications 3 à 6, dans lequel des éléments d'étanchéité (20a, 20b, 21) sont disposés dans le couvercle de contact (10) ainsi que dans le support de contact (4), lesquels éléments peuvent être déformés élastiquement par montage du couvercle de contact (10) sur le support de contact (4) et rendent la connexion par déplacement d'isolant (6) étanche à l'humidité.

9. Capteur selon l'une des revendications 1 à 8, dans lequel l'élément de capteur (1) est disposé dans un orifice (22) du corps de capteur (3).

10. Capteur selon l'une des revendications 1 à 9, dans lequel le corps de capteur (3) comprend une bride (23) au voisinage du support de contact (4) pour le montage du capteur dans la paroi d'un boîtier (24).

11. Capteur selon l'une des revendications 1 à 10, dans lequel le corps de capteur (3) est muni d'une fermeture à baïonnette (25).

12. Capteur selon l'une des revendications 1 à 11, comprenant un système de bus (26).

13. Dispositif de détection
comprenant un capteur (27) selon l'une des revendications 1 à 12 et des conducteurs électriques (7) au moyen desquels chaque contact à déplacement d'isolant (5) est relié à un câble de raccordement électrique (7).

14. Dispositif de détection selon la revendication 13,
dans lequel chaque contact à déplacement d'isolant (5) présente un évidement (8) dans lequel sont disposées deux lames (9) situées en face l'une de l'autre, et dans lequel un câble de raccordement électrique (7) muni d'une isolation électrique (28) est inséré dans un contact à déplacement d'isolant (5) de telle manière que l'isolant (28) soit sectionné par les lames (9) et que les lames (9) viennent au contact du câble de raccordement électrique (7).

15. Dispositif de détection selon la revendication 13 ou 14, comprenant des capteurs supplémentaires selon l'une des revendications 1 à 12, qui forment une pluralité de capteurs (27a, 27b, 27c),
dans lequel chaque contact à déplacement d'isolant (5) de chaque capteur (27a, 27b, 27c) est connecté à un seul et même câble de raccordement électrique (7) et dans lequel tous les autres contacts à déplacement d'isolant (5) sont reliés à un conducteur (29) supplémentaire.

16. Dispositif de détection selon la revendication 13 ou 14, comprenant des capteurs supplémentaires selon l'une des revendications 1 à 12, qui forment une pluralité de capteurs (27a, 27b, 27c),
dans lequel chaque capteur (27a, 27b, 27c) comprend un système de bus (26), dans lequel une pluralité de conducteurs de bus (30) sont prévus et dans lequel chaque conducteur de bus (30) est relié à chaque contact à déplacement d'isolant (5) de chacun des capteurs (27a, 27b, 27c).
